# EUROPEAN PATENT SPECIFICATION

(11) **EP 4 184 422 B1**
(45) Date of publication and mention of the grant of the patent: **19.08.2026**
(21) Application number: 22195294.8
(22) Date of filing: 13.09.2022
(51) Int. Cl.: G06Q 10/0631, G06Q 50/40, H04L 67/12, B64D 11/04, G06Q 10/20

(54) **SYSTEM AND COMPUTER-IMPLEMENTED METHOD FOR MONITORING THE MAINTENANCE STATUS IN TRANSPORT VEHICLES**
SYSTEM UND COMPUTERIMPLEMENTIERTES VERFAHREN ZUR ÜBERWACHUNG DES WARTUNGSZUSTANDES IN TRANSPORTFAHRZEUGEN
SYSTÈME ET PROCÉDÉ MIS EN OEUVRE PAR ORDINATEUR POUR LA SURVEILLANCE DE L'ÉTAT D'ENTRETIEN DANS DES VÉHICULES DE TRANSPORT

(30) Priority: 22.11.2021 US 202163281842 P
(43) Date of publication of application: 24.05.2023
(73) Proprietor: Safran Cabin Germany GmbH, 35745 Herborn (DE)
(72) Inventor: KUSCH, Alexander, 35745 HERBORN (DE); HINTZE, Hartmut, 21079 HAMBURG (DE); GIERTZSCH, Fabian, 21079 HAMBURG (DE); GOD, Ralf, 21079 HAMBURG (DE); NOVAK, Markus, 35630 Ehringshausen (DE); RITZ, Andreas, 35719 Angelburg - Lixfeld (DE)
(74) Representative: Casalonga

(56) References cited:
- EP-A1- 3 754 452
- US-A1- 2020 106 480
- US-A1- 2021 034 048

## Description

### TECHNICAL FIELD

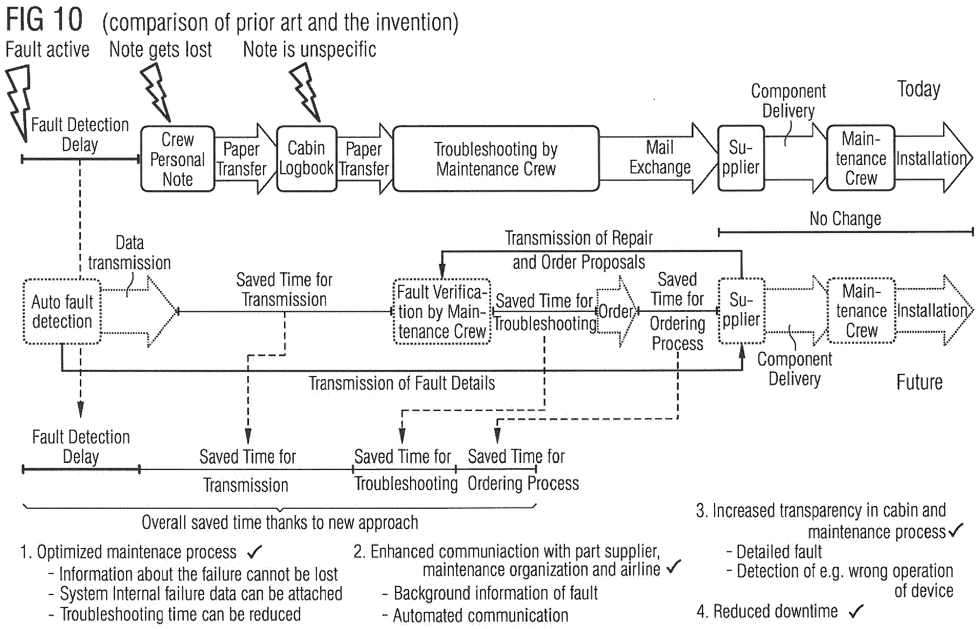

The present invention relates to a system and a method for monitoring the maintenance status of components in transport vehicles such as, for example, aircraft, trains, busses, trucks, ships or cars, more particularly, passenger transport vehicles for passenger transportation such as, for example, passenger aircraft, passenger trains, passenger busses, passenger trucks, passenger ships or passenger cars, even more particularly, respective cabins, galleys and/or kitchenettes on said passenger transport vehicles such as, for example, a cabin and/or a galley of an aircraft, a cabin, galley and/or kitchenette of a train, a cabin, galley and/or kitchenette on a bus, a cabin, galley and/or kitchenette on a truck, a cabin, galley and/or kitchenette on a ship or a cabin, galley and/or kitchenette of a RV (recreational vehicle). In particular, the invention relates to a system for monitoring the maintenance status of components in a transport vehicle and a relating method, such as they are known in the field and shown in Fig. 10 (top).

From each of US 2020/106480 A1, US 2021/034048 A1 and EP 3 754 452 A1 there is already known a system for monitoring the maintenance status of components in a transport vehicle.

Maintenance is intended to ensure that the functional conditions of certain components and entire systems are maintained or, in the event of a fault and/or failure, are restored.

Hereafter, reference is mostly made to a passenger aircraft and a galley in said passenger aircraft as exemplary implementation of the present invention in a transport vehicle.

### BACKGROUND ART

Today's implemented maintenance process, in e. g. a passenger cabin of a passenger aircraft, is shaped by multiple manual steps as depicted in Fig. 10 (top). When a fault occurs in a component, a crew member notices a resulting failure or failure effect. For example, a fuse, a wire or a lamp in a circuit to said lamp might become instable or defective as a fault. Hereby, the subsequent failure or failure effect can be noticed by a crew member, who, for example, would notice that the lamp is not on anymore and/or cannot be switched on anymore. The crew member then manually writes a crew personal note on a piece of paper and sorts this paper note into the cabin logbook. This paper note is then transferred to a maintenance crew, which has to inspect the transport vehicle and perform troubleshooting. After the maintenance crew has found the underlying cause of the fault, the respective supplier is contacted through mail and a mail exchange takes place to order the necessary components for replacement. After the delivery of the component the maintenance crew has to visit the transport vehicle again and install and replace the defective component.

### PROBLEMS ASSOCIATED WITH THE PRIOR ART

Some of the problems with the prior art approach shown in Fig. 10 (top) are as following.

When a fault occurs in a component, it cannot be recognized until a resulting failure or failure effect appears and until a crew member notices said resulting failure or failure effect. Thus, there is a detection delay of the fault until the fault becomes noticeable through a resulting failure or failure effect and there is a detection delay until a crew member notices the resulting failure or failure effect.

Further, the paper note of the crew member on a piece of paper can get lost, e. g. by falling out of the cabin logbook, and the paper note can be unspecific, e. g. just mention that a lamp in the passenger area is defective. The paper note might not even mention the specific lamp and the paper note cannot mention any specific information such as if the lamp is blown, if a certain fuse is blown or if a certain specific wire in the circuit is defective or supporting data.

Due to the unspecific information on the cabin crew's paper note to the maintenance crew, said maintenance crew will have to perform extensive and time-consuming troubleshooting, e. g. including a root cause analysis.

The mail exchange of the maintenance crew with the supplier takes on extra time until the component is delivered.

Depending on the severity of the fault, the transport vehicle may not be usable until the fault is repaired.

### TECHNICAL OBJECTIVES OF THE INVENTION

The objects and purposes of the present invention can be defined as follows:
The maintenance process for components in a transport vehicle, in particular in a passenger transport vehicle, in particular in a cabin, galley and/or kitchenette in a transport vehicle, in particular in a passenger cabin of an aircraft, is to be optimized because information about the fault (any deviation from a defined "normal" operation behavior) and the failure (inacceptable breakdown of system functions) should not be lost, system internal failure data should be attached to a malfunctioning component without the risk of getting lost, and troubleshooting time should be reduced.

Hereby, a failure or failure effect is when a fault has evolved to a point where it can be manually noticed and detected by a crew member.

Further, communication with part suppliers, maintenance organizations and airlines is to be enhanced because of the background information of the faults and failures as well as automated communication.

Furthermore, transparency in a cabin and maintenance process is to be increased because faults and failures are described in detail and for example detection of a wrong operation of a device is documented in detail.

In general, the downtime of the transport vehicles due to maintenance is to be reduced.

If a fault occurs in a component, the cabin crew usually notices the fault by the failure effect later in time due to the restricted functionality, e. g. a fault of the coffee machine in the galley of a passenger aircraft cabin is only discovered through the standard work processes of the cabin crew. This can either be done during the preflight checks or during the catering phase when the required equipment is not available.

### SUMMARY OF THE INVENTION

The invention as provided in claims 1, 10 and 11 solves, at least, the above-mentioned problems of the prior art. Preferred embodiments are presented in the dependent claims.

The proposed system architecture of the present invention mainly addresses the beginning of a process for maintenance of components in a cabin of a transport vehicle, in particular in the passenger cabin of an aircraft, by automatically detecting faults in the system. Accordingly, it sets up a major part of a completely digitized cabin maintenance process and system as depicted in Fig. 10 (bottom).

According to the present invention, due to the automatic detection of a fault, the fault does not need to evolve into a failure that is eventually detected by a crew member. Furthermore, the corresponding information can be directly forwarded to a supplier of the specific part and/or to the maintenance organization without the need of digitizing, either after arrival of the aircraft or even during flight if a ground link is available. Compared to the currently implemented process (Fig. 10, top), the information about the failure cannot be lost and system internal failure data can be attached so that troubleshooting time can be reduced. Based on the detailed failure information orders or repair proposals can be derived which also reduce the delay induced by the communication between part supplier, maintenance organization and airline. Such an approach is generally referred to as "predictive health maintenance" when monitoring the status of system components.

Predictive health maintenance is, generally, not a new concept and has been used in other industries such as industrial manufacturing.

Predictive health maintenance pursues the goal of avoiding failures by pre-planned maintenance measures. The planned measures are determined by the condition monitoring as used within preventive maintenance as well as the predicted component wear given by historical information. As an accurate forecast can only be made based on a large volume of historical information the availability of which is a prerequisite for the application of this strategy. Applying predictive health maintenance, it is possible to determine the right point in time for performing the maintenance measure without the component failing or performing maintenance too early.

The current state of the art for fault detection in transport vehicles is manual detection after the fault has evolved to the point where it can be noticed by an aircraft crew member, i. e. a failure is present. A possible approach to reach the target of high availability of these functions is to use the trend of digitalization for improving function-relevant maintenance processes within the cabin. This requires an introduction of flexible communication architectures to enhance the existing maintenance process by establishing an automated fault detection, root cause analysis, and/or even fault prediction. For implementation it is necessary to provide system data and parameters digitally, e. g. by sensor measurements or an online evaluation of already existing system data logs. An example is the working light within the aircraft galley used to create an appropriate working environment for the cabin crew, for example, to prepare ordered meals for the passengers. Currently, fault detection is only possible by identifying its failure effect, e.g., a not illuminating lighting unit.

Sensors used in the present invention may be of any kind of individually known type of sensors, such as for example digital or analog sensors. Non-limiting examples are described below.

If a fault occurs in a cabin component in a system maintained with the help of a maintenance process according to the prior art, such fault is only indicated by the failure effects of the root cause and then possibly noticed by the cabin crew. This fact as well as the subsequent procedure for communication and manual documentation of the failure is extremely error-prone and does not do justice to the increasing complexity of cabin applications in the above-mentioned transport vehicles.

In order to shorten the maintenance process and make it more manageable, e. g. by eliminating errors, selected aircraft cabin applications are intended to be digitalized in order to be able to have automated fault detection and analysis.

It would be desirable that if a fault occurs, this fault should be immediately recognized and localized as precisely as possible. As a result of simplifying the entire process, it becomes faster and less error-prone. Furthermore, the number of actors involved in a maintenance process conducted by a system according to the present invention is reduced, since the cabin crew is no longer involved.

By detecting a fault automatically, the available information, such as aircraft identification, time of occurrence and component type, can be sent to the respective component manufacturer, the maintenance crew as well as to the airline. Depending on the severity of the fault, the location of the aircraft, the flight plan and the availability of spare parts, the maintenance strategy to fix the fault may then be defined. Finally, the maintenance crew performs the maintenance actions to fix the fault by using the information which they have received before in a digitized format.

### TECHNICAL SOLUTIONS AND ADVANTAGEOUS EFFECTS OF THE INVENTION

Due to the automatic detection of a fault in a system and method according to the present invention, a fault in a component in a transport vehicle, in particular in a passenger transport vehicle, in particular in a cabin, galley and/or kitchenette in a transport vehicle does not have to evolve into a failure that may eventually detected by a crew member. According to the present invention, the probability of any future occurrence of such a failure is evaluated and subsequently early preventive measure may be initiated before it comes to a complete failure of a component.

With the present invention, direct forwarding of the corresponding information of a potential future failure of a component to a supplier of the specific required part (component) and/or to a maintenance crew is possible. This is not possible in the maintenance process implemented in the prior art where there is a paper transfer from the transport vehicles to the maintenance crew through the cabin crew and the cabin logbook and an exchange via email or telephone between the maintenance crew and the supplier.

In the present invention, detailed information and data about the fault and/or failure of a component cannot be lost due to digital and possibly automatic transmission to the maintenance crew and/or the supplier. In contrast thereto, in the maintenance process implemented in the prior art, the documentation and transfer of information are done with paper documents.

Further, in the present invention, the detailed system internal fault and/or failure data can be digitally handled so that troubleshooting time can be reduced. In contrast thereto, in the maintenance process implemented in the prior art, the documentation (generally in paper format) of a failure or failure effect of a component, e. g. a broken lamp, does not allow the maintenance crew to specify the root or fault leading to said failure and, therefore, extensive troubleshooting is necessary. Contrary thereto, in the present invention, the detailed documentation of the fault allows the maintenance crew to specifically identify the fault.

In the prior art, the complicated and labor-intensive manual documentation procedure in case of a component failure is extremely error-prone and adds additional complexity to the transport vehicle applications and the workload of the cabin crew.

In the present invention, due to detailed automatization of data collection and transfer, root cause analysis by the maintenance crew becomes superfluous. This saves time where the transport vehicles cannot be used as well as working hours for the maintenance crew.

When using the system and method of the present invention, in particular in the passenger cabin of an aircraft, the maintenance process becomes improved, faster, safer, more reliable and digitized. This reduces the burden on the cabin crew, the maintenance crew, the supplier and the airline and improves the safety of the system and overall transportation because the involved staff have more time for other safety measurements due to less workload.

Efforts to implement the system and method of the present invention mainly have been made in three categories:
1. Defining the types and locations of the sensors that are needed to enable the data collection that will be used in the fault detection algorithms.
2. The method of data flow and the method for processing the sensor data to generate the fault detections.
3. The interfaces and methods used to communicate the results to airline maintenance crews and/or equipment suppliers.

Currently, equipment faults evolve over time until the scope of failure becomes large enough to be detected by a member of the cabin crew. With automatic fault detection, irregularities in equipment can be detected early so that further complications and/or collateral damage do not occur. In addition, automatic detection of faults and automatic root cause analysis greatly reduces maintenance times and errors in the maintenance process. It is also possible to predict when equipment will fail, which further reduces maintenance times and errors.

Accordingly, the present invention solves the problem of improving the known error prone system and method for monitoring the maintenance status of components of a transport vehicle as stated above like an aircraft, or a passenger aircraft or a galley of an aircraft as well as the problems stated above.

Hereby, the implementation of predictive health maintenance status of a transport vehicle like an aircraft or a passenger aircraft, particularly an aircraft galley, is novel. Predictive health maintenance intends to determine the condition of in-service equipment by using historical data and condition monitoring in order to estimate when maintenance should be performed. Predictive health maintenance of the present invention is based on the digitalization of the maintenance process.

According to the present invention this problem is solved by a system according to independent claim 1. The dependent claims relate to advantageous embodiments.

For example, by measuring the electricity consumption of the light source via a digital sensor, it would be possible to detect a changing trend in the electricity consumption and, in turn, to trigger a maintenance task to replace the light before it actually fails. The evaluation of such an electricity consumption measurement with the resulting fault prediction would expand the maintenance system by a new function.

The system according to the present invention aims at implementing digital transformation in a transport vehicle, in particular in a passenger transport vehicles, in particular in a cabin, galley and/or kitchenette in a transport vehicle, and requires the implementation of digital technologies taking advantage of the digitization and digitalization process using digital technologies to transform and integrate analog processes into a digital workflow to provide value producing opportunities.

There is a need for a high level of specification of how digitally supportable maintenance processes for any cabin system are to be systematically identified and which system modifications are necessary for implementation.

The condition monitoring of specific components in a transport vehicle, and in particular the passenger cabin of an aircraft, enables maintenance prediction and detection and localization of faults by using the current system condition information correlated with historical information. This output of the maintenance prediction step is eventually used to determine the necessary scope of maintenance measures to be carried out and to calculate the optimal point in times for performing maintenance as part of a predictive maintenance strategy.

Condition monitoring aims at determining the current condition of a system, a process or a component. In modern commercial aircraft this can be achieved for the avionic systems and parts of the cabin systems by the implemented Built in Test Equipment (BITE), which sends a corresponding status message to the centralized On-Board Maintenance System (OMS) in the event of a fault. Measurable deviations from the normal state within a system are caused by a fault. This can for example be a degraded electrical connection of a light unit. This failure leads to an error condition of the light unit in which it no longer receives power. The resulting failure of no illumination is the resulting effect noticed by the user.

Automated condition monitoring is often achieved by monitoring limit values for important process parameters such as the electricity consumption (current) within the example mentioned before. If parameter limits are exceeded, the system issues an alarm and the user takes an action if the system cannot solve the problem on its own. In most cases this method of limit value monitoring is sufficient to detect larger faults. Modern systems theory also uses systematic mathematical driven estimation and identification methods for fault detection. Two of the possible methods are fault detection through limit values and fault detection through trend monitoring which are described in the following.

The method of fault detection by monitoring limit values is the most widespread and the simplest one. In this case a parameter Y(t) of a system or a component is measured and monitored constantly. A minimum limit value *Ymin* and a maximum limit value *Ymax* are defined. The system is in the normal operating state if: $Ymin < Y \left(t\right) < Ymax$

If the measured value *Y*(*t*) falls below the lower limit or exceeds the upper limit, a fault is displayed. The limits are selected on the basis of empirical values and usually set to a value which intends to avoid a false alarm and premature detection.

An extension of the fault detection is given by monitoring the trend of the measured value which is equivalent to the rate of change of a parameter. For the realization the first derivative of the measurement signal Ẏ(t) = dY(t) / dt will be determined. In addition, a minimum permissible rate of change Ymin and a maximum permissible rate of change Ymax are set. Within these given limits the signal is in the normal state if: $\dot{Y} min < \dot{Y} \left(t\right) < \dot{Y} max$

By choosing small limit values within this method, faults can be detected faster than monitoring the limit values in equation (1).

The root cause analysis of a fault consists of determining the type of fault including the size of the fault, fault location and time of occurrence. The diagnostic methods used are based on existing knowledge of the observed technical process. For some technical processes the fundamental relationships between the causes of fault and the failure effect are known due to the causal relationship of fault, error and failure. The derivation of these relationships is mostly based on Fault-tree analysis (FTA) according to the standard IEC 61025, 12/06 (EN 61025:2007-04, DIN EN 61025:2007-08) of the European Cooperation for Space Standardization which leads from the failure effects via error states to the root causes and its faults.

Fault trees are established as a method to visualize the relationships between the fault and its root cause. They establish the relationships between the cause and effect of fault as a binary system and connect them logically in a tree diagram. The fault is located at the top of the tree and represents a fault of a system component such as a pump or a pipe as cause of a malfunction.

In the present invention, root cause analysis is performed automatically by the system.

### DESCRIPTION OF THE DRAWINGS

**Fig.** 1 shows a diagram depicting the functional and logical architecture for a system for digitized galley maintenance in an aircraft as it may be used in an exemplary embodiment of a system according to the present invention;
Fig. 2 shows the physical architecture of a Galley Information System (GIS) that may be used in the system shown in Fig. 1 for monitoring the maintenance status of a galley in an aircraft;
Fig. 3 shows the software architecture for the system shown in Fig. 1 for monitoring the status of galley maintenance in an aircraft
Fig. 4 depicts a dataflow overview in the system shown in Fig. 1 for monitoring the status of galley maintenance in an aircraft;
Fig. 5 shows the dataflow and encoding for real-time processing of sensor data in the system shown in Fig. 1 for monitoring the status of galley maintenance in an aircraft;
Fig. 6 shows examples for dataflow and encoding for on-demand analysis data that may be employed in the system shown in Fig. 1 or monitoring the status of galley maintenance in an aircraft;
Fig. 7 shows an exemplary sensor placement for a water system that maybe used in the system shown in Fig. 1 for monitoring the status of galley maintenance in an aircraft;
Fig. 8 shows an exemplary sensor placement for a cooling system in an aircraft galley that may be used in a system shown in Fig. 1 for monitoring the status of galley maintenance in an aircraft;
Fig. 9 shows an exemplary sensor placement for an electrical system in a system shown in Fig. 1 for monitoring the maintenance status of components in an aircraft galley according to a preferred embodiment of the invention.
Fig. 10 shows a chart for comparing a method for monitoring the maintenance status of components in the galley of an aircraft as it is currently employed in the prior art and a method for monitoring the maintenance status of components in the galley of an aircraft according to the present invention.

### DETAILED DESCRIPTION OF THE DRAWINGS

The following detailed description of the drawings will discuss preferred embodiments of a system according to the invention and a method according to the invention.

Although the given examples are described for a galley in a passenger aircraft, said features can, in principle, be implemented in any transport vehicle mentioned above, in particular, any passenger transport vehicle mentioned above and any respective cabin thereof.

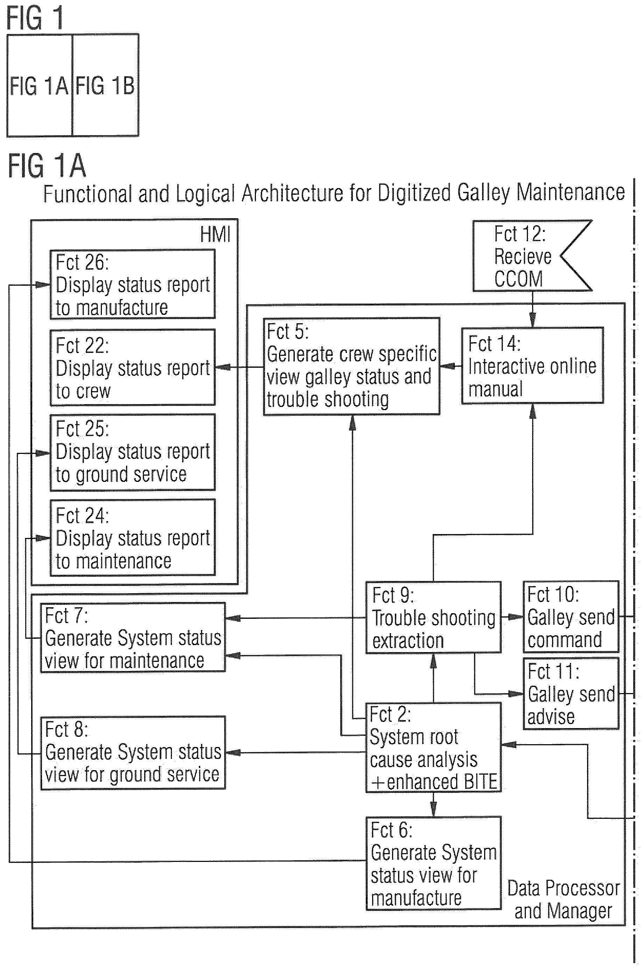

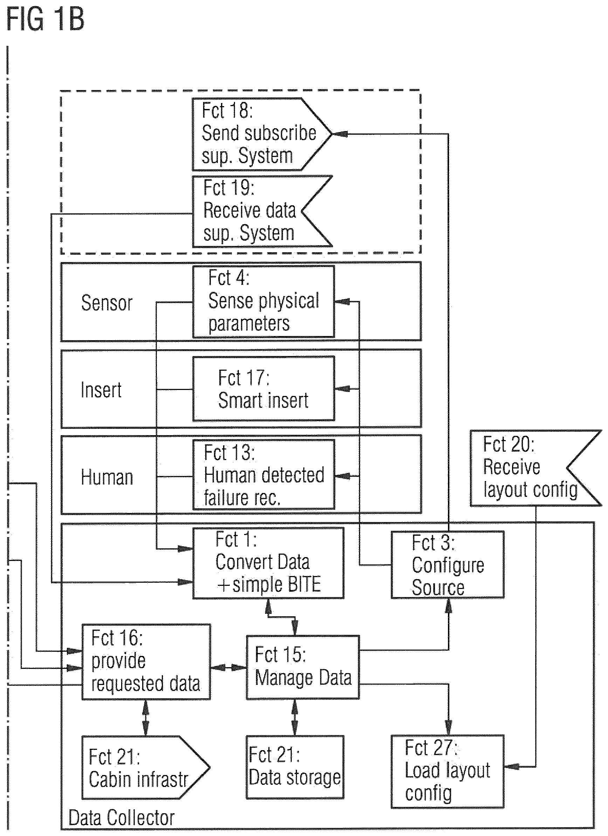

The generic functional architecture shown in Fig. 1 (Fct 1 - Fct 27) allows to digitize an exemplary galley maintenance processes. As indicated by the logical architecture (HMI, Data Processor and Manager, Sensor, Insert, Human, Data Collector), it foresees data acquisition from sensors as well as optionally from inserts and also optionally from crew members (human input). Acquired data is forwarded to at least one data processor and manager. Acquired data may be pre-processed in at least one data collector, forwarded to the at least one data processor and manager and visualized on at least one Human-Machine-Interface (HMI). A connection to at least one superior system (dashed-line), e.g., a cabin maintenance system, is included as an optional provision.

Hereby, the data collector, the HMI, the superior system and an insert are optional features, which are not essential for the present invention.

The optional data collector may comprise features suitable to convert data and simple built in test equipment (BITE)(Fct 1), configure source (Fct 3), load layout configuration (Fct 27), manage data (Fct 15), provide requested data (Fct 16), cabin infrastructure (Fct 21) and data storage (Fct 23).

At least one sensor may comprise features suitable to sense physical parameters (Fct 4). The at least one optional insert may comprise features suitable for smart insert (Fct 17). Humans may optionally interact by exchanging data like human detected failure recordings (Fct 13).

The data processor and manager may comprise features suitable for system root cause analysis and enhanced BITE (Fct 2), generating a crew specific view galley status and troubleshooting (Fct 5), generating a system status view for manufacture (Fct 6), generating a system status view for maintenance (Fct 7), generating a system status view for ground service (Fct 8), troubleshooting extraction (Fct 9), galley send command (Fct 10), galley send advise (Fct 11), and an interactive online manual (Fct 14).

The optional HMI may comprise features suitable to display a status report to the crew (Fct 22), display a status report to the maintenance (Fct 24), display a status report to the ground service (Fct 25), and display a status report to manufacturer (Fct 26).

The optional superior system may comprise features suitable to send subscribe superior system data (Fct 18) and receive data superior system data (Fct 19).

The functional and logical architecture may optionally further comprise features suitable to receive a CCOM (Fct 12, Cabin Crew Operations Manual) and receive a layout configuration (Fct 20).

The data exchanges in the system and method of the present invention may be implemented as described above as well as depicted in Fig. 1.

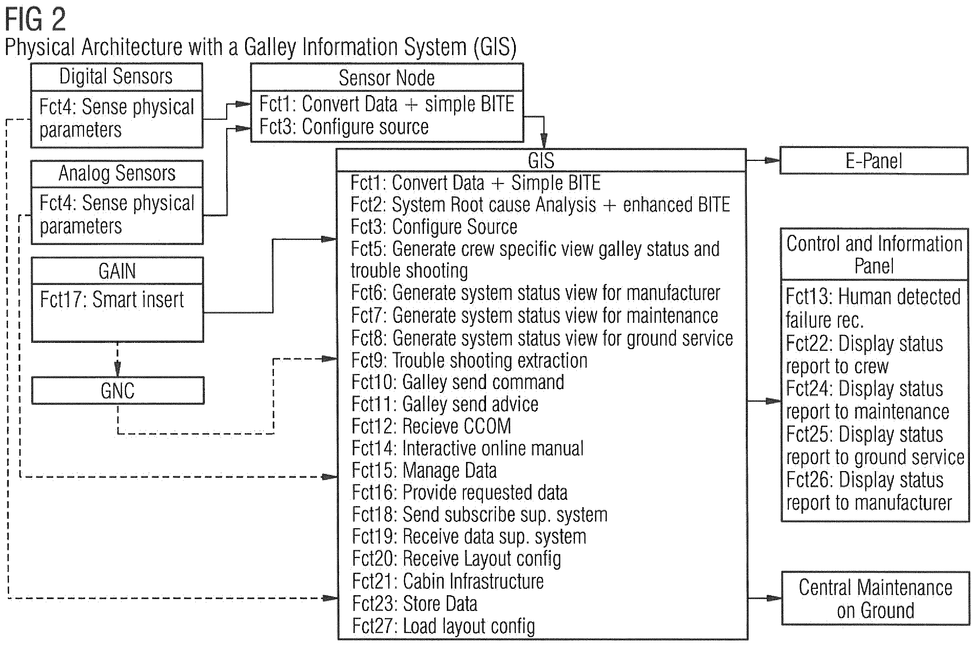

In order to realize the logical architecture shown in Fig. 1, the physical architecture shown in Fig. 2 has been developed.

The exemplary physical architecture shown in Fig. 2 may comprise at least one digital sensor and/or analog sensor, which both can sense physical parameters (Fct 14) and which are connected to at least one sensor node, which can convert data and simple BITE (Fct 1) and configure source data (Fct 3), to provide data about, for example, voltages, currents and/or frequencies. The sensor node may provide data to the galley information system (GIS), which is an example how the functional and logical architecture shown in Fig. 1 could be physically implemented in a cabin of a transport vehicle such as a passenger aircraft. Such a GIS also receives data from the digital and analog sensors, a galley insert equipment (GAIN) and a GNC. The GIS may provide data to an e-panel, a central maintenance center on the ground, optionally via cellular or satellite communication, and/or a control and information panel via Wi-Fi comprising the features of the HMI and human detected failure recordings (Fct 13).

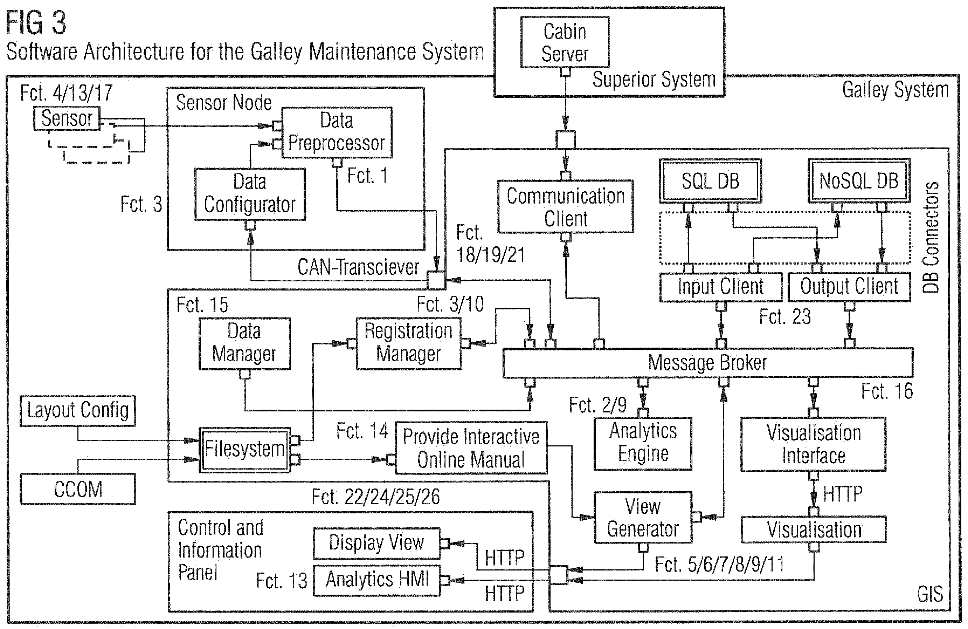

The overall software architecture realizing the functions derived before (Fct 1 - Fct 27) depicting the main building blocks of each physical component as well as the inter- and intra-component interfaces is shown in Fig. 3. The sensor node may comprise at least one data processor and at least one data configurator and may be connected to the GIS via a CAN-transceiver. The GIS may comprise a data manager, a registration manager, a Message broker (open-source message-broker software), a filesystem, an interactive online manual, an analytics engine, a view generator, an interactive visualization web application, a visualization interface, a client input and a client output. The client input and the client output are connected via DB (database) connectors to SQL DB and NoSQL DB. The GIS is connected to a control and information panel that may comprise a display view and an analytics HMI. The layout configuration and the CCOM may provide data to the filesystem of the GIS.

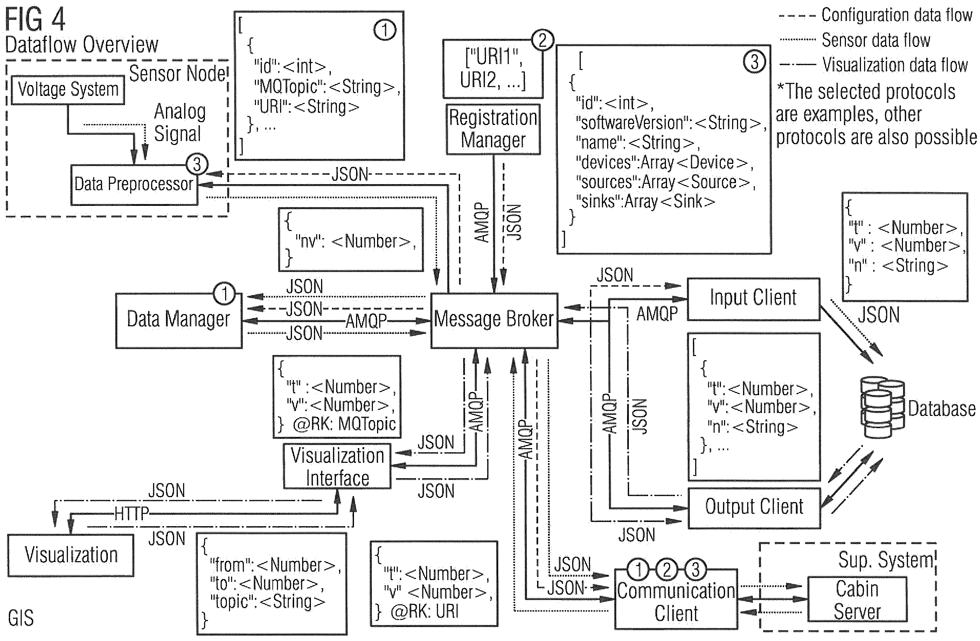

The software of the main component GIS is organized as a microservice architecture in which the microservices communicated via message broker using the Advanced Message Queueing Protocol (AMQP). A detailed visualization of the dataflow between the microservices is shown in Fig. 4.

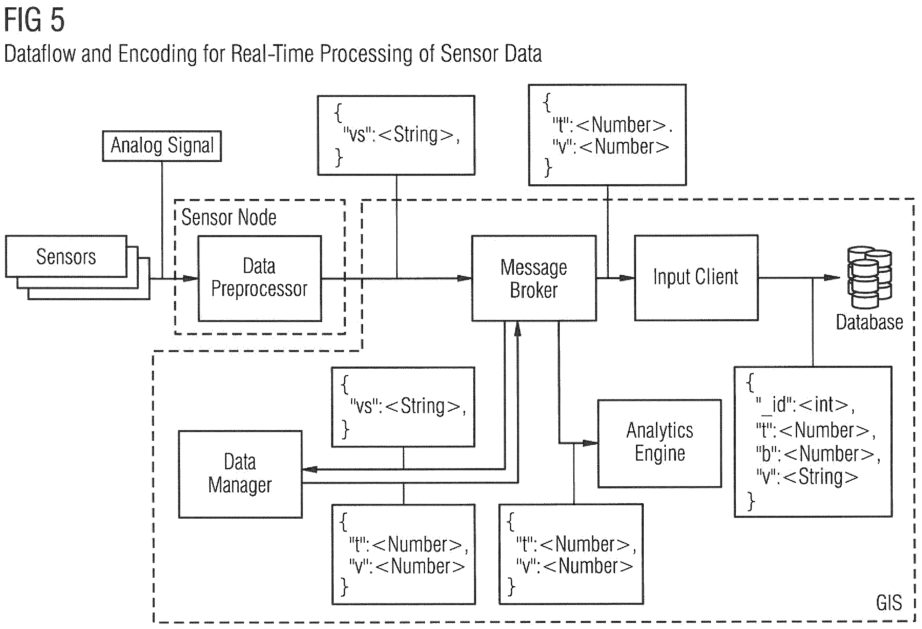

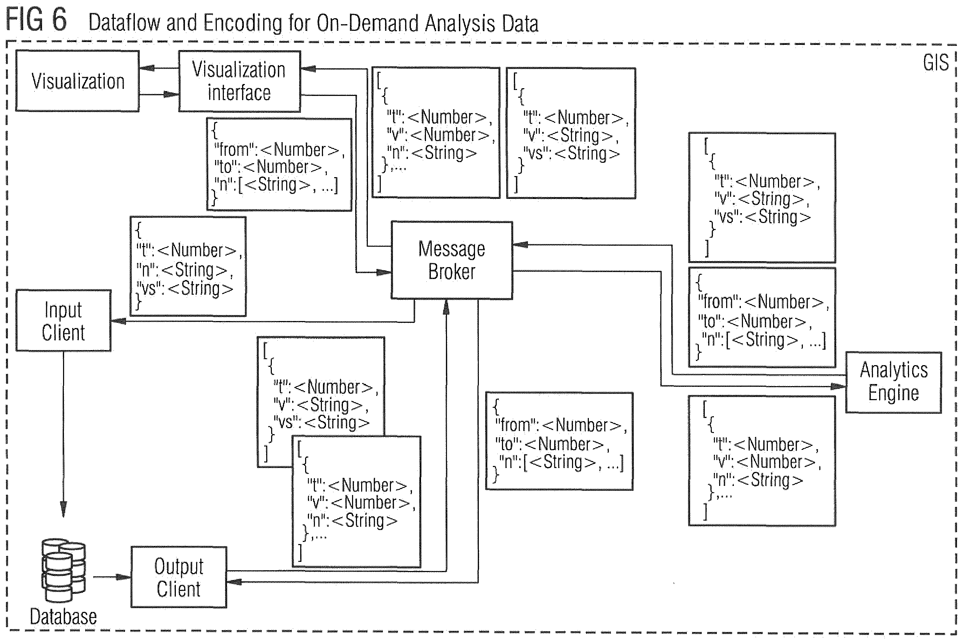

The dataflow can be roughly separated into two categories:
1. Streaming data (Fig. 5) that is stored in a database and monitored continuously (in "real-time").
2. On-demand data (Fig. 6) requested from the database in case of maintenance activities, triggered either automatically by a Root Cause Analysis or manually by human input.

In a system according to the invention, possible failures in components in a cabin of a passenger transport vehicle are analyzed resulting in a set of information and a decision tree to detect and predict such a failure. This set of information is then translated into the occurrence of a fault and, possibly, a failure in a specific physical sensor and their corresponding positions, e. g. in a component used in the galley of a passenger aircraft. The data acquired by these sensors allows to derive the required information for evaluating the decision tree in real-time, e. g during the flight of an aircraft. This evaluation is one application that can be realized by the architecture described before, i.e., by implementing the decision tree in an analytics engine.

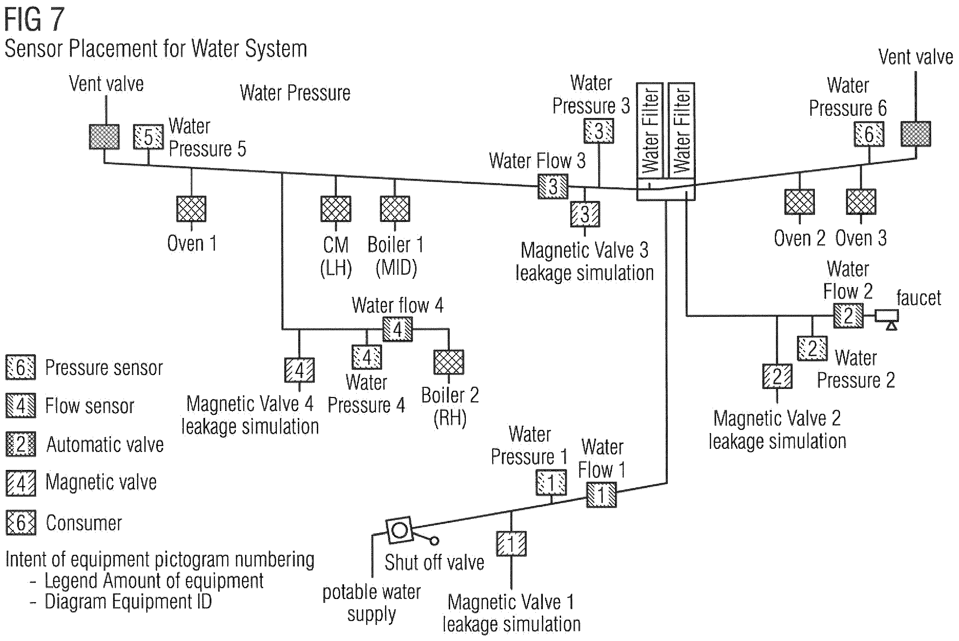

**Fig. 7****,** **Fig.** 8 and **Fig. 9****,** respectively, exemplarily show an exemplary sensor placement in the galley of a cabin of a passenger aircraft for detecting failures in a water supply system, cooling system and electrical system.

Fig. 7 shows an example for possible sensor placements for a water system in in a galley in a passenger aircraft. The red boxes represent the respective consumers of water like an oven, a boiler or a CM (coffee machine) to which water should be provided to. Further, additional features like a water filter, a faucet or various kinds of generally known valves, like shut off valves, vent valves, automatic valves or magnetic valves may be present in the water system. For the implementation of the present invention respective sensors like pressure sensors and flow sensors are integrated into the water system at necessary and/or suitable positions. Such positions are, generally, between two of the above describe features of the water system, for example, between the water supply and the water filter, between the water filter and a consumer or faucet, or between two consumers.

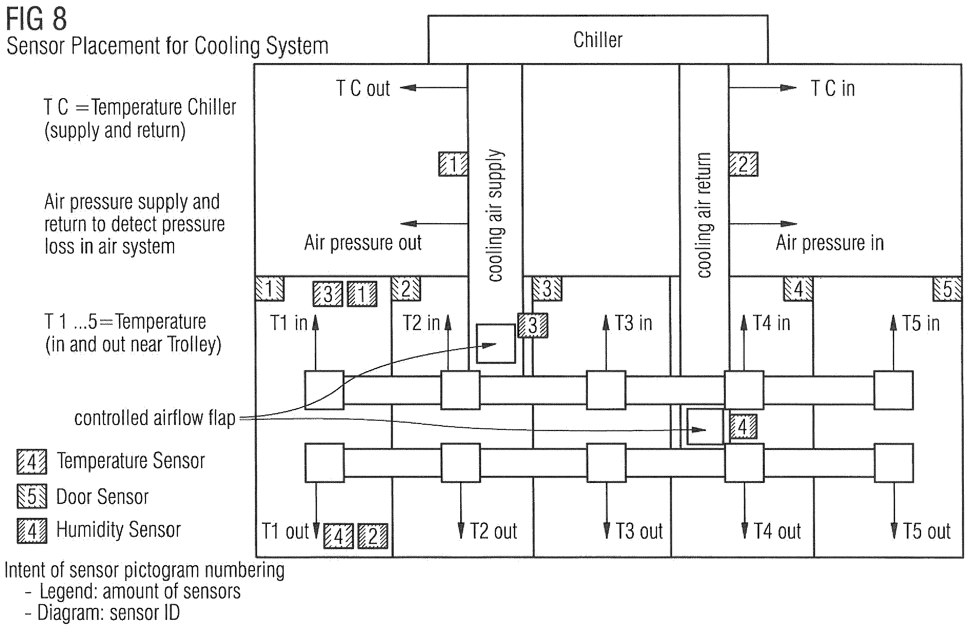

Fig. 8 shows an example for possible sensor placement for a cooling system in a galley in a passenger aircraft. A chiller is provided with a cooling air supply and a cooling air return with an incoming and outgoing temperature (Temperature Chiller TC in/out) and an air pressure supply and return (Air pressure in/out). The chiller may be connected to trolleys in an exemplary galley in a passenger aircraft, where each trolley can be placed in a suitable insert. The example in Fig. 8 shows five trolley inserts with respective incoming and outgoing temperatures (T1-T5 in/out), which are connected to the cooling air supply and the cooling air return. The air flow can be controlled by airflow flaps (cf. Fig. 8). In the invention, temperature sensors are placed, at least, at the cooling air supply and cooling air return and in each insert suitable for one trolley (red boxes in Fig. 8). Further, every insert has a door sensor (blue boxes in Fig. 8). Furthermore, humidity sensors are placed at suitable and/or necessary positions (yellow boxes in Fig. 8), these positions can include every insert and a location at the cooling air supply as well as at the cooling air return.

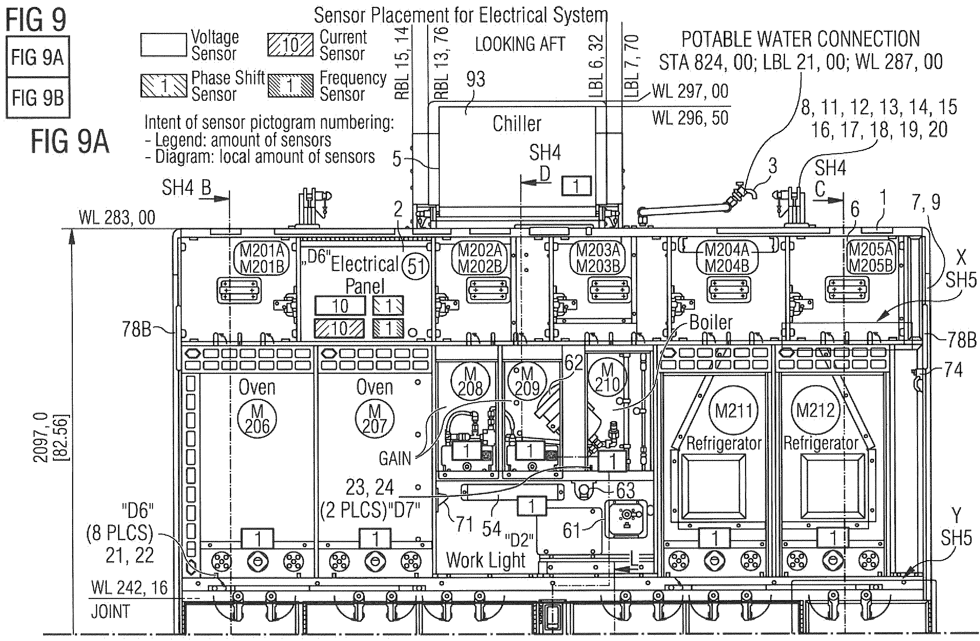

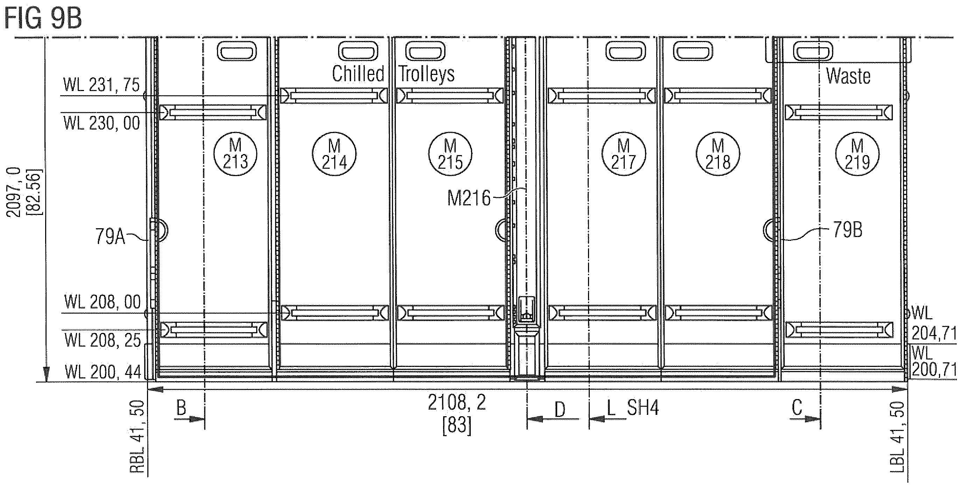

Fig. 9 shows an example for possible sensor placement for an electrical system in a galley in a passenger aircraft. The consumers such as ovens, boilers, chilled trolleys, chillers, refrigerators, lights, GAINs and electrical panels are present in such a galley or cabin. For each of these consumers there is at least one voltage sensor provided in the system of the invention. In addition, there may be further sensors such as current sensors, phase shift sensors and/or frequency sensors present for each consumer to monitor the respective physical values. In Fig. 9, such sensors are shown exemplary for the electrical panel but can be provided for each consumer. All sensors can also be provided in several places for one consumer such as at the incoming as well as at the outcoming connection. The sensor positions are shown as an example only and may vary from galley to galley depending on the geometrical requirements of the systems and the vehicle.

When installed in passenger aircraft, a system according to the invention is part of the galley system installed in the aircraft, but enables a completely digitized cabin maintenance process. Thus, points of interaction are both Human-Machine-Interfaces (HMIs) and Machine-to-Machine (M2M) Interfaces.

In this case, whenever a fault has been detected a corresponding information about reduced galley operational functionality may be visualized on an HMI for the cabin crew. There are various ways for the communication with the cabin crew based on detected faults, e.g., by providing operational hints based on airline-specific procedures or by explicitly stating the function or part that is not available.

External M2M interfaces can be integrated via the proposed Galley Information System (GIS) that stores fault and failure data as well as operational data in a generic format and is organized in a micro-service architecture. When used in a passenger aircraft and if a ground link is available, an additional service can be implemented that interacts with the airline infrastructure already during flight in order to trigger maintenance preparation at the destination for (business-) critical failures. Similar to cabin crew specific views, detailed failure data can be presented to the maintenance personal via an HMI or via M2M interface allowing to download collected data.

### Alternative embodiments

This invention describes a solution for an aircraft galley, but similar methods could be used for the predictive health management of transport vehicles as mentioned above.

### Industrial applicability

This invention can be applied in monitoring the maintenance status of components in The aforementioned transport vehicles such as, for example, commercial aircraft galleys. embodiments are meant to be examples useful for understanding the invention. The present invention is only defined by the appended claims.

### List of abbreviations

- HMI: Human Machine Interface
- BITE: Built in Test Equipment
- CCOM: Cabin Crew Operations Manual
- GIS: Galley Information System
- AMQP: Advanced Message Queing Protocol
- GNC: Galley Network Controller
- HTTP: Hypertext Transfer Protocol
- DB: Database
- JSON: JavaScript Object Notation
- RPC Data: Remote Procedure Call Data
- CM: Coffee Maker
- M2M: Machine-to-machine
- OMS: On-Board-Maintenance-System
- MEL: Minimum Equipment List
- GAIN: Gallery Insert Equipment
- IFE: In-Flight-Entertainment
- NEF: Non-Essential Equipment and Furnishings
- TSM: Trouble-Shooting Manual
- AMM: Aircraft Maintenance Manual
- LRU: Line Replaceable Unit
- FTA: Fault Tree Analysis
- ATA: Air Transport Association of America
- FMEA: Failure Mode and Effects Analysis
- LRU: Line Replaceable Unit
- RPN: Risk Priority Number

## Claims

1. A system for monitoring the maintenance status of components in a transport vehicle, **wherein**
the system comprises:
at least one data processor and manager,
at least one sensor (1, 4, 5, 6, 10) for automatic fault detection in at least one component of the components of the transport vehicle, said sensor (1, 4, 5, 6, 10) being configured to sense at least one physical parameter indicative of a predictive health maintenance status of said at least one component of said transport vehicle and said at least one sensor (1, 4, 5, 6, 10) being configured to forward data indicative of the predictive health maintenance status of said at least one component to the at least one data processor and manager,
- wherein the system is configured to implement automatic fault detection by using historical data and automated monitoring of limit values of the change rate of the at least one physical parameter of the said at least one component in said transport vehicle to detect and localize faults in said at least one component in order to estimate when maintenance must be performed, and
- wherein the system is configured to implement predictive health maintenance of said at least one component, whereby through predictive health maintenance it is determined when to perform a preventive measure prior to said at least one component failing,
- wherein the system is configured to implement automatic root cause analysis of a fault of said at least one component of said transport vehicle, by determining the type of fault including the size of the fault, fault location and time of occurrence based on the data of the automatic fault detection, and the system comprises Built in Test Equipment which monitors the status of the said at least one component and sends a corresponding status message to the centralized On-Board Maintenance System in the event of fault occurrence,
- wherein the components are electrical components such as lights, ovens, refrigerators, chillers, boilers, heaters, and/or trolleys, and/or mechanical components such as filters, faucets, and/or water supplies.

2. The system according to any preceding claims, wherein the system further comprises at least one data collector capable of exchanging data with the at least one data processor and manager and/or the at least one sensor (1, 4, 5, 6, 10) .

3. The system according to any preceding claims, wherein the system further comprises at least one cabin insert capable of exchanging data with the at least one data processor and manager and/or the at least one data collector.

4. The system according to any preceding claims, wherein the system further comprises at least one human machine interface capable of exchanging data with the at least one data processor and manager and/or with the at least one data collector.

5. The system according to any preceding claims, wherein the at least one data processor and manager and/or the at least one data collector are capable of exchanging data indicative of the predictive health maintenance status of the at least one component with a central maintenance unit and/or a supplier of the component.

6. The system according to any preceding claims, wherein the transport vehicle is an aircraft, a train, a bus, a truck, a ship or a car.

7. The system according to claim 6, where the transport vehicle is a passenger aircraft, a passenger train, a passenger bus, a passenger truck, a passenger ship or a passenger car.

8. The system according to any preceding claims, wherein the components are in a galley of a transport vehicle.

9. The system according to any preceding claims, wherein the sensors are at least one of pressure sensor (6), flow sensor (4), temperature sensor (4), door sensor (5), humidity sensor (4), voltage sensor, current sensor (10), phase shift sensor (1), and/or frequency sensor (1) .

10. A method for monitoring the maintenance status of components in a transport vehicle implemented by a system according to any of claims 1 to 9.

11. A computer program comprising instructions to cause the system of any one of claims 1-9 to execute the method of claim 10.

12. A computer-readable medium having stored thereon the computer program of claim 11.

## Patentansprüche

1. System zur Überwachung des Wartungszustands von Komponenten in einem Transportfahrzeug,
**wobei**
das System umfasst:
mindestens einen Datenverarbeiter und -verwalter, mindestens einen Sensor (1, 4, 5, 6, 10) zur automatischen Fehlererkennung in mindestens einer Komponente der Komponenten des Transportfahrzeugs, wobei der Sensor (1, 4, 5, 6, 10) so konfiguriert ist, dass er mindestens einen physikalischen Parameter, der auf einen Zustand der vorausschauenden Zustandsüberwachung der mindestens einen Komponente des Transportfahrzeugs hinweist, erfasst, und der mindestens eine Sensor (1, 4, 5, 6, 10) so konfiguriert ist, dass er Daten, die auf den Zustand der vorausschauenden Zustandsüberwachung der mindestens einen Komponente hinweisen, an den mindestens einen Datenverarbeiter und -verwalter weiterleitet,
- wobei das System so konfiguriert ist, dass es eine automatische Fehlererkennung durch Verwendung historischer Daten und eine automatisierte Überwachung von Grenzwerten der Änderungsrate des mindestens einen physikalischen Parameters der mindestens einen Komponente in dem Transportfahrzeug implementiert, um Fehler in der mindestens einen Komponente zu erkennen und zu lokalisieren, um abzuschätzen, wann eine Wartung durchgeführt werden muss, und
- wobei das System so konfiguriert ist, dass es die vorausschauende Zustandsüberwachung der mindestens einen Komponente implementiert, wobei durch die vorausschauende Zustandsüberwachung bestimmt wird, wann eine präventive Maßnahme durchzuführen ist, bevor die mindestens eine Komponente ausfällt,
- wobei das System so konfiguriert ist, dass es eine automatische Ursachenanalyse eines Fehlers der mindestens einen Komponente des Transportfahrzeugs durchführt, indem es die Art des Fehlers einschließlich der Größe des Fehlers, des Fehlerorts und des Zeitpunkts des Auftretens auf der Grundlage der Daten der automatischen Fehlererkennung bestimmt, und
das System eine eingebaute Prüfeinrichtung umfasst, die den Zustand der mindestens einen Komponente überwacht und im Fehlerfall eine entsprechende Zustandsmeldung an das zentrale On-Board-Wartungssystem sendet,
- wobei die Komponenten elektrische Komponenten wie Leuchten, Öfen, Kühlschränke, Kühlanlagen, Heizkessel, Heizgeräte und/oder Wagen und/oder mechanische Komponenten wie Filter, Wasserhähne und/oder Wasserversorgungen sind.

2. System nach einem der vorhergehenden Ansprüche, wobei das System ferner mindestens einen Datensammler umfasst, der in der Lage ist, Daten mit dem mindestens einen Datenverarbeiter und -verwalter und/oder dem mindestens einen Sensor (1, 4, 5, 6, 10) auszutauschen.

3. System nach einem der vorhergehenden Ansprüche, wobei das System ferner mindestens einen Kabineneinsatz umfasst, der in der Lage ist, Daten mit dem mindestens einen Datenverarbeiter und -verwalter und/oder dem mindestens einen Datensammler auszutauschen.

4. System nach einem der vorhergehenden Ansprüche, wobei das System ferner mindestens eine Mensch-Maschine-Schnittstelle umfasst, die in der Lage ist, Daten mit dem mindestens einen Datenverarbeiter und -verwalter und/oder mit dem mindestens einen Datensammler auszutauschen.

5. System nach einem der vorhergehenden Ansprüche, wobei der mindestens eine Datenverarbeiter und -verwalter und/oder der mindestens eine Datensammler in der Lage sind, Daten, die auf den Zustand der vorausschauenden Zustandserhaltung der mindestens einen Komponente hinweisen, mit einer zentralen Wartungseinheit und/oder einem Lieferanten der Komponente auszutauschen.

6. System nach einem der vorhergehenden Ansprüche, wobei das Transportfahrzeug ein Flugzeug, ein Zug, ein Bus, ein Lkw, ein Schiff oder ein Auto ist.

7. System nach Anspruch 6, wobei das Transportfahrzeug ein Passagierflugzeug, ein Passagierzug, ein Passagierbus, ein Passagier-Lkw, ein Passagierschiff oder ein Personenwagen ist.

8. System nach einem der vorhergehenden Ansprüche, wobei sich die Komponenten in einer Bordküche eines Transportfahrzeugs befinden.

9. System nach einem der vorhergehenden Ansprüche,
wobei die Sensoren mindestens einer von einem Drucksensor (6), einem Durchflusssensor (4), einem Temperatursensor (4), einem Türsensor (5), einem Feuchtigkeitssensor (4), einem Spannungssensor, einem Stromsensor (10), einem Phasenverschiebungssensor (1) und/oder einem Frequenzsensor (1) sind.

10. Verfahren zur Überwachung des Wartungszustands von Komponenten in einem Transportfahrzeug, implementiert durch ein System nach einem der Ansprüche 1 bis 9.

11. Computerprogramm, das Anweisungen umfasst, die das System nach einem der Ansprüche 1 bis 9 dazu veranlassen, das Verfahren nach Anspruch 10 auszuführen.

12. Computerlesbares Medium, auf dem das Computerprogramm nach Anspruch 11 gespeichert ist.

## Revendications

1. Système de surveillance de l'état de maintenance de composants dans un véhicule de transport,
**dans lequel**
le système comprend :
au moins un processeur et gestionnaire de données,
au moins un capteur (1, 4, 5, 6, 10) pour la détection automatique de défaut dans au moins un composant des composants du véhicule de transport, ledit capteur (1, 4, 5, 6, 10) étant configuré pour détecter au moins un paramètre physique indiquant un état de maintenance prédictive dudit au moins un composant dudit véhicule de transport et ledit au moins un capteur (1, 4, 5, 6, 10) étant configuré pour transmettre des données indicatives de l'état de maintenance prédictive dudit au moins un composant à l'au moins un processeur et gestionnaire de données,
- dans lequel le système est configuré pour mettre en œuvre une détection automatique de défaut en utilisant des données historiques et une surveillance automatisée de valeurs limites du taux de variation de l'au moins un paramètre physique dudit au moins un composant dans ledit véhicule de transport pour détecter et localiser des défauts dans ledit au moins un composant afin d'estimer quand une maintenance doit être effectuée, et
- dans lequel le système est configuré pour mettre en œuvre une maintenance prédictive dudit au moins un composant, dans lequel, par le biais d'une maintenance prédictive, il est déterminé quand effectuer une mesure préventive avant la défaillance dudit au moins un composant,
- dans lequel le système est configuré pour mettre en œuvre une analyse automatique des causes principales d'un défaut dudit au moins un composant dudit véhicule de transport, en déterminant le type de défaut incluant la taille du défaut, l'emplacement du défaut et l'instant d'apparition sur la base des données de la détection automatique de défaut, et
le système comprend un équipement de test intégré qui surveille l'état dudit au moins un composant et envoie un message d'état correspondant au système de maintenance embarqué centralisé dans le cas d'une apparition de défaut,
- dans lequel les composants sont des composants électriques tels que des éclairages, des fours, des réfrigérateurs, des refroidisseurs, des chaudières, des réchauffeurs et/ou des chariots, et/ou des composants mécaniques tels que des filtres, des robinets et/ou des alimentations en eau.

2. Système selon l'une quelconque des revendications précédentes, dans lequel le système comprend en outre au moins un collecteur de données apte à échanger des données avec l'au moins un processeur et gestionnaire de données et/ou l'au moins un capteur (1, 4, 5, 6, 10).

3. Système selon l'une quelconque des revendications précédentes, dans lequel le système comprend en outre au moins un insert de cabine apte à échanger des données avec l'au moins un processeur et gestionnaire de données et/ou l'au moins un collecteur de données.

4. Système selon l'une quelconque des revendications précédentes, dans lequel le système comprend en outre au moins une interface homme-machine apte à échanger des données avec l'au moins un processeur et gestionnaire de données et/ou l'au moins un collecteur de données.

5. Système selon l'une quelconque des revendications précédentes, dans lequel l'au moins un processeur et gestionnaire de données et/ou l'au moins un collecteur de données sont apte à échanger des données indicatives de l'état de maintenance prédictive de l'au moins un composant avec une unité de maintenance centrale et/ou un fournisseur du composant.

6. Système selon l'une quelconque des revendications précédentes, dans lequel le véhicule de transport est un aéronef, un train, un bus, un camion, un navire ou une voiture.

7. Système selon la revendication 6, dans lequel le véhicule de transport est un aéronef de passagers, un train de passagers, un bus de passagers, un camion de passagers, un navire de passagers ou une voiture de passagers.

8. Système selon l'une quelconque des revendications précédentes, dans lequel les composants se trouvent dans une cuisine d'un véhicule de transport.

9. Système selon l'une des revendications précédentes, dans lequel les capteurs sont au moins l'un parmi un capteur de pression (6), un capteur de débit (4), un capteur de température (4), un capteur de porte (5), un capteur d'humidité (4), un capteur de tension, un capteur de courant (10), un capteur de déphasage (1) et/ou un capteur de fréquence (1).

10. Procédé de surveillance de l'état de maintenance de composants dans un véhicule de transport mis en œuvre par un système selon l'une quelconque des revendications 1 à 9.

11. Programme informatique comprenant des instructions pour amener le système selon l'une quelconque des revendications 1 à 9 à exécuter le procédé selon la revendication 10.

12. Support lisible par ordinateur sur lequel est stocké le programme informatique selon la revendication 11.
